# EUROPÄISCHE PATENTANMELDUNG

(11) **EP 3 097 997 A1**
(43) Veröffentlichungstag der Anmeldung: **30.11.2016**
(21) Anmeldenummer: 16171632.9
(22) Anmeldetag: 27.05.2016
(51) Int. Cl.: B22D 41/58, B22D 41/18

(54) **STOPFEN IN EINEM ZUSAMMENWIRKEN MIT EINER BODENAUSGUSSDÜSE IN EINEM METALLURGISCHEN GEFÄSS**

(30) Priorität: 28.05.2015 AT 504352015
(71) Anmelder: Sheffield Hi-Tech Refractories Germany GmbH, 46446 Emmerich am Rhein (DE); INTECO melting and casting technologies GmbH, 8600 Bruck a.d. Mur (AT)
(72) Erfinder: Aspeslagh, Dirk, 3300 373 Arganil (PT); Troiss, David, 8670 Krieglach (AT)
(74) Vertreter: Wildhack & Jellinek

(57) **Zusammenfassung**

Die Erfindung bezieht sich auf einen Stopfen (1) in einem Zusammenwirken mit einer Bodenausgussdüse (7) in einem metallurgischen Gefäß.
Um bei einem Gießbetrieb eine Oxidbildung im Flüssigstahl und ein Anwachsen von Ansätzen am Feuerfestmaterial im Bereich der Durchflussregelung zu vermeiden, ist erfindungsgemäß vorgesehen, dass der Regelteil (3) des Stopfens (1), die ringförmige Regelfläche (31) einschließend, aus einem porösen gasdurchlässigen Feuerfestwerkstoff gebildet ist.

## Beschreibung

Die Erfindung bezieht sich auf einen Stopfen in einem Zusammenwirken mit einer Bodenausgussdüse in einem metallurgischen Gefäß, insbesondere in einem Verteilergefäß, zur Regelung der Durchflussgeschwindigkeit beziehungsweise Gießgeschwindigkeit einer metallischen Schmelze, gegebenenfalls in einem Kristallisator einer Stranggießeinrichtung, wobei der Stopfen im Wesentlichen umfasst einen feuerfesten keramischen Rohrkörper mit einerseits einem Festlegungsmittel in einer bewegbaren Betätigungseinrichtung beziehungsweise Steuerung und andererseits beziehungsweise gegenüberliegend am Stopfenende ein konvex-konisches Regelteil mit einer ringförmigen Regelfläche, welche mit einer Regelfläche im Eintrittsteil einer Bodenausgussdüse durchflussbestimmend für die Schmelze zusammenwirkt, wobei im Hohl des Rohrkörpers des Stopfens ein Durchflussregelungsmittel für ein seitens der Festlegung zuführbares Inertgas positioniert ist.

Flüssiges Metall, insbesondere Stahlschmelzen, werden oftmals zu Brammen, Blooms und dergleichen mit unmittelbar walzbaren Querschnitten meist mittels Stranggießanlagen gegossen. Dabei erfolgt ein geregeltes Einbringen des Flüssigmetalles beziehungsweise Stahles aus der Pfanne über ein Zwischengefäß oder einen Verteiler in den Kristallisator beziehungsweise in die Kokille einer Stranggießeinrichtung.

Eine bestimmte Abziehgeschwindigkeit des Stranges aus der Kokille und somit eine geregelte Zufuhr von Schmelze in den Kristallisator sind im Hinblick auf eine hohe Qualität des Gussstranges erforderlich und einzustellen.

Der Flüssigstahl, der zumeist eine hohe Reinheit beziehungsweise einen geringen Oxidgehalt aufweist, wird in der Regel von einer schweren Stahlwerkspfanne in einen Verteiler und von diesem mengengeregelt in die Kokille eingebracht.

Eine Mengenregelung des Flüssigmetalles bei einem Einleiten desselben in die Kokille erfolgt zumeist durch ein System mittels eines Stopfens im Zusammenwirken mit einer Bodenausgussdüse im Verteilergefäß.

Bei einem geregelten Einbringen des flüssigen Stahles mit hoher Reinheit in die Kokille kann durch den im System gebildeten Unterdruck im strömenden Flüssigmetall durch Spalten oder infolge einer Porosität im Feuerfestmaterial Luft angesaugt werden, welche eine chemische Reaktion insbesondere mit dem Sauerstoffanteil der Luft in der Metallphase bewirkt.

Die Reaktionsprodukte im Flüssigstahl, insbesondere Oxide, können einerseits den Reinheitsgrad des erstarrten Stranges entscheidend verschlechtern, andererseits, wie vielfach angenommen wird, auch ein Anhaften beziehungsweise ein Anwachsen von hochschmelzendem Material an der feuerfesten Oberfläche im Regelbereich des Durchflussquerschnittes von Stopfen und/oder Bodenausgussdüse hervorrufen.

Es ist eine Reihe von Vorschlägen bekannt geworden, einen Stopfen zu schaffen, der ein Einsaugen von Luft beziehungsweise Sauerstoff in den Flüssigstahl verhindern soll und gegebenenfalls gleichzeitig Inertgas axial in den Gießstrahl einführt.

Weiters ist bekannt, Bodenausgussdüsen besonders auszubilden, um ein Anhaften und Anwachsen von Material an der Feuerfestwand zu vermeiden und die Strömungsverhältnisse im Flüssigmetall im Regelbereich frei von Nachteilen wie Turbulenzen und dergleichen während der gesamten geplanten Gießzeit konstant zu halten.

Allgemein muss festgestellt werden, dass die Ursachen und Mechanismen einer Bildung von Ansätzen an Feuerfestflächen durch daran entlangströmenden Flüssigstahl nicht restlos geklärt sind.

Die Erfindung setzt sich zum Ziel, einen Stopfen in einem Zusammenwirken mit einer Bodenausgussdüse in einem metallurgischen Gefäß der eingangs genannten Art zu schaffen, mittels welchen im Gießbetrieb eine Vermeidung einer Oxidbildung im Flüssigstahl erfolgt, eine Ausbildung bzw. ein Anwachsen von Ansätzen an den Flächen des Feuerfestmaterials im Bereich der Durchflussregelung des Stahles, insbesondere an den Regelflächen, verhindert wird und die Strömungsverhältnisse in der Bodenausgussdüse bis unterhalb des Gießspiegels in der Kokille konstant, insbesondere turbulent, verbleiben

Dieses Ziel wird bei einem Stopfen in einem Zusammenwirken mit einer Bodenausgussdüse gemäß dem Oberbegriff des Anspruches 1 dadurch erreicht, dass das Regelteil des Stopfens, die ringförmige Regelfläche einschließend, aus einem porösen gasdurchlässigen Feuerfestwerkstoff gebildet ist.

Die mit der Erfindung erwirkten Vorteile sind im Wesentlichen darin zu sehen, dass im gesamten Oberflächenbereich des Regelteils des Stopfens bei einem durch die Metallströmung beim Gießbetrieb hervorgerufenen Unterdruck aus einer Vielzahl von kleinen Poren Inertgas, insbesondere Argon, ausströmt und die Gasblasen weitgehend mit dem Metallstrom mitgeführt werden. Dadurch wird einerseits erreicht, dass sich eines flächigen Gasaustritts wegen keine Ansätze an der Feuerfestoberfläche bilden können, andererseits erhöht sich durch die Vielzahl das Volumen der Bläschen gezielt.

Befürchtungen, die Porosität des Regelteiles werde beim Gießen zu einem hohen Oberflächenverschleiß zumindest im Bereich der ringförmigen Regelfläche führen, haben sich nicht bestätigt. Offenbar bewirkt das durchströmende Gas eine Kühlung der oberflächennahen Zone des Feuerfestwerkstoffes und verhindert weitgehend eine Materialabtragung.

Durch die ansatzfrei bleibende Oberfläche des Regelteiles und durch die im Stahlstrom integrierten Bläschen bleiben die Strömungsverhältnisse im System gleich, wobei auch die Strömungsenergie des in die Kokille eingeführten Metalles verringert ist.

Ein Vermeiden eines Ansaugens von Luft in das Hohl des Rohrkörpers des Stopfens und eine mit einem Durchflussregelungsmittel gesteuerte Zuführung von Inertgas zum Regelteil sind dem Fachmann an sich bekannt.

In einer bevorzugten Ausführungsform der Erfindung ist im Stopfen das Durchflussregelungsmittel für das Inertgas zumindest großteils beabstandet zum Regelteil im keramischen Rohrkörper gasdicht festgelegt.

Durch diese Ausgestaltung erfolgt vorteilhaft weitgehend zentrisch im Innenbereich des Regelteiles eine Bereitstellung von Inertgas, wodurch ein gleichmäßiges Ausströmen desselben von der Oberfläche gefördert wird.

In einer Weiterbildung der Erfindung weist die Bodenausgussdüse einen Aufbau und eine Befestigung am metallurgischen Gefäß beziehungsweise am Verteiler auf, mittels welchen ein Einsaugen von Luftsauerstoff in den fließenden metallischen Gießstrahl weitestgehend verhindert ist.

Mit Vorteil wird dadurch erreicht, dass ein Sauerstoffeinbringen in den flüssigen Stahl auch über die Bodenausgussdüse ausgeschaltet ist.

Auch bei zeitweiser großer Drosselung des Gießstromes oder bei stark schwankenden Metallmengen, welche während des Gießens in die Kokille eingebracht werden (Stop/Go-Betrieb) ist derart ein Einsaugen von Sauerstoff in das Gießmetall ausgeschaltet.

Nach einer besonders bevorzugten Ausführungsform der Erfindung weist die Bodenausgussdüse einen Rohrkörper und ein mit diesem verbundenes Eintrittsteil zur Schmelzenführung auf, welche Teile mittels einer luftdichten, insbesondere metallischen, Hülse mit einem Flansch dicht an der Unterseite des Verteilers festgelegt sind.

In günstiger Weise wird mit dieser erfindungsgemäßen Ausbildungsform der Bodenausgussdüse beim Gießen ein Sauerstoffeintrag in das Flüssigmetall verhindert. Weiters können in bevorzugter Weise metallische Hülsen vorgefertigt und bereitgestellt werden, was wirtschaftliche Vorteile aufweist.

Wenn gemäß einer Weiterbildung der Erfindung das Eintrittsteil der Bodenausgussdüse aus einem porösen gasdurchlässsigen Feuerfestwerkstoff gebildet ist und in diesem der Regelfläche nach außen hin schräg gegenüberliegend eine Verteilnut für ein zugeführtes Inertgas ausgeformt ist, kann mit Vorteil im Eintrittsteil großflächig Inertgas in kleinen Bläschen in das flüssige Metall beim Gießbetrieb eingebracht und mitgeführt werden.

Derart ist neben anderen Vorteilen allenfalls eine Ausbildung von Ansätzen oder ein Anwachsen derselben an der Oberfläche des Eintrittsteiles der Bodenausausgussdüse während des Gießbetriebes verhinderbar.

Anhand von schematischen Darstellungen soll die Erfindung weiter erläutert werden.

Es zeigen schematisch die
Fig. 1 einen Verteiler mit einem Stopfen im Zusammenwirken mit einer Bodenausgussdüse
Fig. 2 einen Stopfen und eine Bodenausgussdüse im Bereich der Durchflussregelung für das Gießmetall vergrößert im Schnitt.

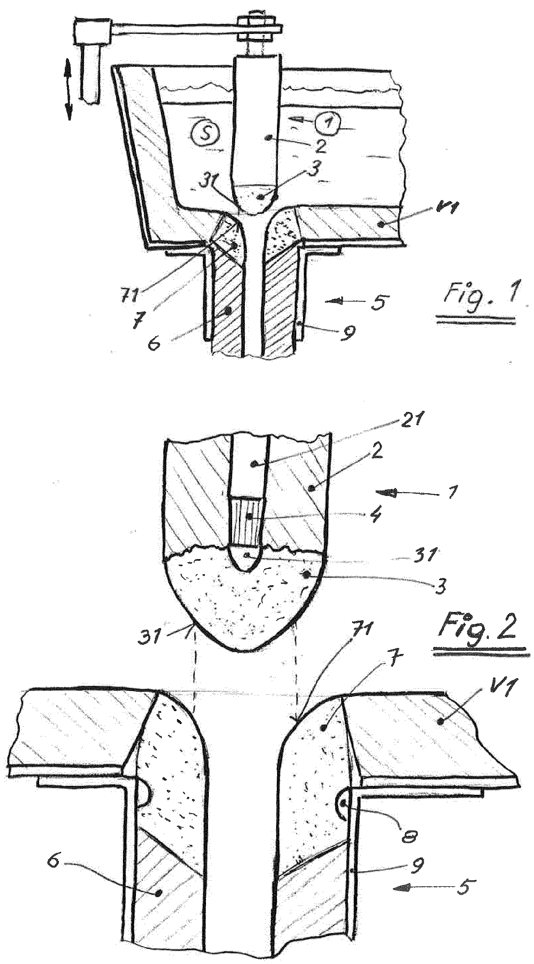

Fig. 1 zeigt ein metallurgisches Gefäß in Form eines Verteilers V mit einer feuerfesten Zustellung V1 und einer Steuerung S eines Stopfens 1.
Der Stopfen 1 besteht aus einem keramischen Rohrkörper 2 mit einerseits einer Festlegung in einer Steuerung S beziehungsweise in einer bewegbaren Betätigungseinrichtung, durch welche Festlegung Inertgas in das Hohl 21 des Rohrkörpers 2 einführbar ist und andererseits einem konvex-konischen Regelteil 3.

Mit gleicher Längsaxe wie der Stopfen 1 ist eine Bodenausgussdüse 5 in einem Verteilergefäß V angeordnet. Die Bodenausgussdüse 5 besteht aus einem Rohrkörper 6 und einem Eintrittsteil 7, welche Teile in einer Hülse 9 mit einem Flansch eingesetzt und mit dieser im Verteiler V festgelegt sind.

Fig. 2 zeigt das Endteil eines Stopfens 1 und ein Einlaufteil 7 einer Bodenausgussdüse 5 in einem Verteilergefäß V schematisch im Bereich einer Schmelzendurchflussregelung.

Ein Stopfen 1 mit einem Rohrkörper 2 und daran anschließend mit einem Regelteil 3 ist durchwegs in einem Arbeitsgang günstig herstellbar.

Der Rohrkörper 2 weist im Hohl 21 desselben ein Durchflussregelungsmittel 4 auf, mittels welchen ein Druck beziehungsweise eine Durchflussmenge von Inertgas in einem Innen-oder Verteilungsraum 32 des Regelteiles 3 einstellbar sind.

Das Regelteil 3 des Stopfens 2 ist gemäß der Erfindung aus einem porösen gasdurchlässigen Feuerfestwerkstoff gebildet und schließt eine ringförmige Regelfläche 31 an der Außenoberfläche zur Einstellung der Durchflussmenge an Flüssigmetall ein.

Eine mit einem Stopfen 1 axgleich ausgerichtete Bodenausgussdüse 5 besteht aus einem Rohrkörper 6 und einem Eintrittsteil 7 für eine Schmelze, welche Teile miteinander durch eine gemeinsame beziehungsweise gleichzeitige Fertigung verbunden sind.

Zumindest ein Teil des Rohrkörpers 6, der mit dem Eintrittsteil 7 verbunden ist, ist gasdicht in einer Hülse 9 festgelegt, welche Hülse 9 mittels eines Flansches gasdicht bodenseitig am Verteile V angebracht ist. In der Mauerung V1 des Verteilers V ist das Eintrittsteil 7 dicht eingesetzt.

Das Eintrittsteil 7 für die Schmelze besteht gemäß einer Ausbildungsform der Erfindung aus einem gasdurchlässigen porösen Feuerfestwerkstoff und weist schräg nach außen hin der Regelfläche 71 gegenüberliegend eine umlaufende Verteilungsnut 8 auf.

Im Gießbetrieb wird durch einen Abstand zwischen der Regelfläche 31 des Stopfens 1 und der Regelfläche 71 am Eintrittsteil 7 der Bodenausgussdüse 5 im Wesentlichen die Durchflussmenge an Flüssigmetall und derart die Gießgeschwindigkeit bestimmt.

Beim Durchgang zwischen den Regelflächen 31 und 71 bildet sich im Flüssigstahl eine erhöhte Geschwindigkeit aus, woraus ein Unterdruck in diesem entsteht, welcher durch das Gewicht der Stahlsäule in der Bodenausgussdüse bis zum Gießspiegel in der Kokille vermehrt wird.
Durch eine großflächige Einleitung von Inertgas in kleinen Bläschen in den Flüssigstahl bei einer Vermeidung einer Oxidation durch eingesaugten Sauerstoff werden während der gesamten Gießzeit eine Bildung beziehungsweise ein Anwachsen von Ansätzen an Flächen des Feuerfestmaterial im gesamten Gießkanal verhindert.

Bei Versuchen wurde eine Gütesteigerung der Gußstränge bei einer Verringerung des Sauerstoffgehaltes des Materials um 15 bis 20 ppm festgestellt.

## Patentansprüche

1. Stopfen (1) in einem Zusammenwirken mit einer Bodenausgussdüse (5) in einem metallurgischen Gefäß (V), insbesondere in einem Verteilergefäß, zur Regelung der Durchflussgeschwindigkeit beziehungsweise Gießgeschwindigkeit einer metallurgischen Schmelze (S), gegebenenfalls in einem Kristallisator einer Stranggießeinrichtung, wobei der Stopfen (1) im Wesentlichen umfasst einen feuerfesten keramischen Rohrkörper (2) mit einerseits einem Festlegungsmittel in einer bewegbaren Betätigungseinrichtung beziehungsweise Steuerung und andererseits beziehungsweise gegenüberliegend am Stopfenende ein konvex-konisches Regelteil (3) mit einer ringförmigen Regelfläche (31), welche mit einer Regelfläche (71) im Eintrittsteil (7) einer Bodenausgussdüse (5) durchflussbestimmend für die Schmelze zusammenwirkt, wobei im Hohl (21) des Rohrkörpers (2) des Stopfens (1) ein Durchflussregelungsmittel (4) für ein seitens der Festlegung zuführbares Inertgas positioniert ist, **dadurch gekennzeichnet, dass** das Regelteil (3) des Stopfens (1), die ringförmige Regelfläche (31) einschließend, aus einem porösen gasdurchlässigen Feuerfestwerkstoff gebildet ist.

2. Stopfen (1) in einem Zusammenwirken mit einer Bodenausgussdüse (5) nach Anspruch 1, **dadurch gekennzeichnet, dass** im Stopfen (1) das Durchflussregelungsmittel (4) für das Inertgas zumindest großteils beabstandet zum Regelteil (3) im keramischen Rohrkörper (2) in Richtung der Festlegung gasdicht festgelegt ist

3. Stopfen in einem Zusammenwirken mit einer Bodenausgussdüse (5) nach Anspruch 1, **dadurch gekennzeichnet, dass** die Bodenausgussdüse (5) einen Aufbau und eine Befestigung am metallurgischen Gefäß (V) aufweist, mittels welchen ein Einsaugen von Luftsauerstoff in den fließenden metallischen Gießstrahl durch den feuerfesten Werkstoff des Gießrohres (6) weitestgehend verhindert ist.

4. Stopfen in einem Zusammenwirken mit einer Bodenausgussdüse (5) nach Anspruch 3, **dadurch gekennzeichnet, dass** die Bodenausgussdüse (5) einen Rohrkörper (6) und ein mit diesem verbundenes Eintrittsteil (7) aufweist, welche Teile mittels einer luftdichten, insbesondere metallischen, Hülse (9) mit einem Flansch dicht an der Unterseite des Verteilers (V) festgelegt sind.

5. Stopfen in einem Zusammenwirken mit einer Bodenausgussdüse (5) nach Anspruch 4, **dadurch gekennzeichnet, dass** das Eintrittsteil (7) der Bodenausgussdüse (5) aus einem porösen gasdurchlässigen Feuerfestwerkstoff gebildet ist und in diesem der Regelfläche (71) nach außen hin schräg gegenüberliegend eine umlaufende Verteilungsnut (8) für ein zugeführtes Inertgas ausgeformt ist.
